# EUROPÄISCHE PATENTSCHRIFT

(11) **EP 3 480 144 B1**
(45) Veröffentlichungstag und Bekanntmachung des Hinweises auf die Patenterteilung: **07.01.2026**
(21) Anmeldenummer: 18199552.3
(22) Anmeldetag: 10.10.2018
(51) Int. Cl.: B65G 47/84, B65G 47/88

(54) **BEHÄLTERBEHANDLUNGSMASCHINE UND TRANSPORTEINRICHTUNG FÜR BEHÄLTER**
CONTAINER TREATMENT MACHINE AND TRANSPORT DEVICE FOR CONTAINERS
MACHINE DE MANIPULATION DE RÉCIPIENT ET DISPOSITIF DE TRANSPORT POUR RÉCIPIENT

(30) Priorität: 03.11.2017 DE 202017106660 U
(43) Veröffentlichungstag der Anmeldung: 08.05.2019
(73) Patentinhaber: Krones AG, 93073 Neutraubling (DE)
(72) Erfinder: Zeus, Florian, 93073 Neutraubling (DE); Steimmer, Juergen, 93073 Neutraubling (DE); Spindler, Juergen, 93073 Neutraubling (DE)
(74) Vertreter: Grünecker Patent- und Rechtsanwälte PartG mbB

(56) Entgegenhaltungen:
- EP-A1- 0 543 209
- DE-A1- 102013 105 460
- DE-A1- 102015 121 433
- DE-A1- 2 103 627
- DE-A1- 2 913 446
- DE-A1- 3 825 069
- JP-A- S5 931 210
- US-A- 2 619 217
- US-A- 2 628 703
- US-A- 4 793 461
- US-A- 4 830 173
- US-A- 5 368 151

## Beschreibung

Die vorliegende Erfindung betrifft eine Behälterbehandlungsmaschine zum Transportieren von Behältern.

### Stand der Technik

Behälterbehandlungsmaschinen sowie Transporteinrichtungen sind aus dem Stand der Technik bekannt.

Eine Behälterbehandlungsmaschine gemäß dem Oberbegriff des Anspruchs 1 ist dabei bekannt und umfasst ein oder mehrere Transportbänder mit einem anschließenden Sägezahnstern.

In der Maschine kann eine Sperrvorrichtung vorgesehen sein, die den Einlaufbereich des Sägezahnsterns an einer Seite der Transporteinrichtung derart sperrt, dass keine Behälter mehr in den Einlauf des Sägezahnsterns eindringen können.

Diese Maschine erlaubt zwar einen verbesserten Transport der Behälter insbesondere mit Hinblick auf einen reduzierten Abrieb der Behälter, jedoch stellt sich heraus, dass gerade bei hohen Transportgeschwindigkeiten und Stau der Behälter die in Bewegungsrichtung führenden Behälter beschädigt werden können, wenn die Übergabe der Behälter an den Sägezahnstern nicht korrekt erfolgt.

Aus der DE 10 2015 121433 A1 ist eine Behälterbehandlungsmaschine nach dem Oberbegriff des Anspruchs 1 bekannt.

### Aufgabe

Ausgehend vom bekannten Stand der Technik liegt der Erfindung daher die Aufgabe zugrunde, Mittel zum Transport der Behälter bereitzustellen, die bei möglichst niedrigem Abrieb auch unerwünschte Beschädigungen der Behälter verhindern.

### Lösung

Diese Aufgabe wird durch die Behälterbehandlungsmaschine zum Behandeln von Behältern nach Anspruch 1 gelöst. Vorteilhafte Weiterbildungen der Erfindung sind in den Unteransprüchen erfasst.

Die erfindungsgemäße Behälterbehandlungsmaschine ist dadurch gekennzeichnet, dass die stromauf des Sägezahnsterns angeordnete Sperrvorrichtung für Behälter zum Sperren und Freigeben des Einlaufbereichs zwei Sperrelemente umfasst, die auf gegenüberliegenden Seiten des Transportbandes angeordnet sind. Mit dieser Ausführung der Sperrvorrichtung kann erreicht werden, dass die auf die oder den in Transportrichtung führenden Behälter einwirkenden Kräfte bei einem Rückstau gleichmäßig verteilt werden und das Risiko von Verformungen oder Beschädigungen dieser Behälter reduziert wird.

Es kann vorgesehen sein, dass die Sperrelemente als Sperrklinken mit einer gekrümmten Kontaktfläche für die Behälter ausgebildet sind. Bevorzugt kann die Kontur der Kontaktfläche in diesem Fall (zumindest abschnittsweise) im Wesentlichen der äußeren Kontur eines auf dem Transportband transportierten Behälters entsprechen. So kann eine formschlüssige Stabilisierung des Behälters auch bei Rückstau erfolgen, was eine effektive und beschädigungsfreie Ableitung der auf den Behälter einwirkenden Kräfte in die Sperrelemente bewirkt.

Ferner kann jeder Sperrklinke ein pneumatischer oder elektrischer Antrieb zum Bewegen der Sperrklinke zwischen einer Sperrposition und einer Durchlassposition zugeordnet sein. So ist eine genaue Steuerung der Sperrelemente möglich, was auch bei hohen Transportgeschwindigkeiten das Sperren des Einlaufbereichs des Sägezahnsterns mit vermindertem Risiko für Beschädigungen der Behälter erlaubt.

Alternativ sind die Sperrelemente als Sperrsterne mit wenigstens drei Sperrzähnen ausgebildet und die Rotationsachse der Sperrsterne verläuft senkrecht zur durch das zweite Transportband definierten Transportebene der Behälter. Durch Bewegung dieser Sperrsterne kann zum einen der Einlauf blockiert und zum anderen beim Öffnen des Einlaufs des Sägezahnsterns bereits eine Trennung des führenden Behälters von den übrigen Behältern bewirkt werden, sodass auch eine Beschädigung des führenden Behälters beispielsweise bei Wiederaufnahme des Transports vermieden wird.

Insbesondere kann jedem Sperrstern ein Antrieb, insbesondere ein Stellantrieb zugeordnet sein, der eine Bewegung des Sperrsterns derart bewirken kann, dass in einer Sperrposition ein Zahn in das zweite Transportband hineinragt und in einer Durchlassposition eine Tasche des Sperrsterns in Richtung des zweiten Transportbandes zeigt. Ist der Antrieb beispielsweise als Servomotor ausgebildet, kann eine zuverlässige Steuerung der Bewegung der Sperrsterne und damit der Sperrung/Öffnung des Einlaufbereichs bewirkt werden.

Erfindungsgemäß ist die Sperrvorrichtung in dem Einlaufbereich unmittelbar vor dem Sägezahnstern angeordnet. Dabei bedeutet "unmittelbar" hier, dass der Abstand der Sperrvorrichtung, insbesondere des in Transportrichtung vorderen Endes der Sperrvorrichtung, zum Sägezahnstern höchstens gleich dem Durchmesser eines mit der Behälterbehandlungsmaschine zu behandelnden Behälters ist. So kann sichergestellt werden, dass nur genau ein Behälter in den Einlauf des Sägezahnsterns eindringt und durch Sperren des Einlaufs die übrigen Behälter daran gehindert werden. Das Risiko einer Beschädigung des einen Behälters beim Übergang in den Sägezahnstern kann so verringert werden.

### Kurze Beschreibung der Figuren

- Figur 1: zeigt eine Behälterbehandlungsmaschine mit einem Maschineneinlauf gemäß dem Stand der Technik,
- Figuren 2a+b: zeigen zwei Ausführungsformen der Behälterbehandlungsmaschine mit einer Sperrvorrichtung gemäß der Erfindung,
- Figuren 3a+b: zeigen Ausführungsformen der Kontaktfläche einer Sperrklinke

### Ausführliche Beschreibung

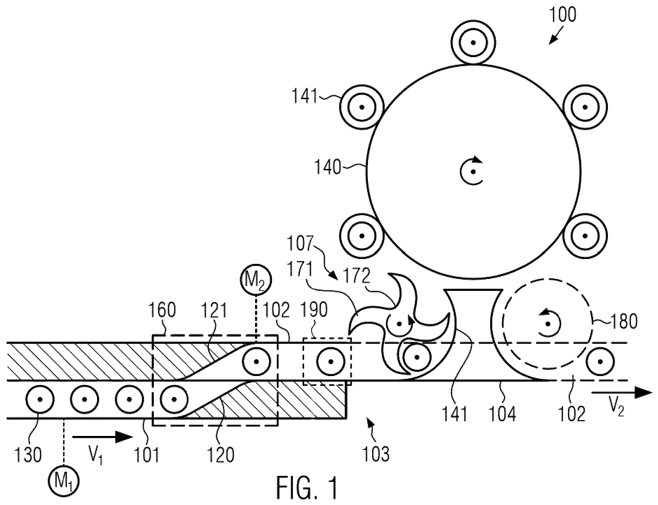

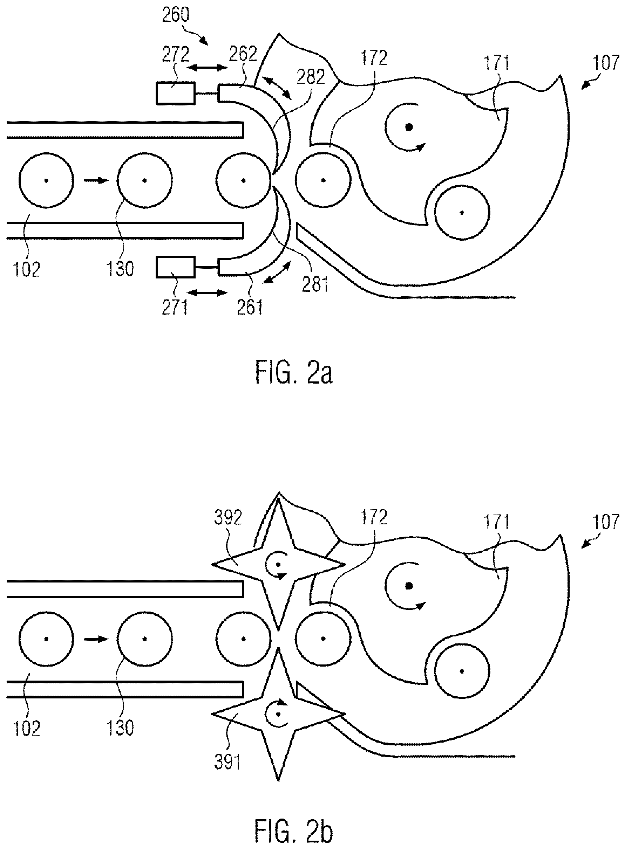

Figur 1 zeigt eine Behälterbehandlungsmaschine 100 gemäß dem Stand der Technik, wobei die erfindungsgemäße Sperrvorrichtung in den Figuren 2a und 2b näher erläutert wird.

Bei der Behälterbehandlungsmaschine kann es sich um jede Art von Behälterbehandlungsmaschine handeln, die zur Behandlung vorzugsweise ausgeformter Behälter, wie beispielsweise Flaschen, ausgebildet ist. Dazu zählen beispielsweise Etikettiermaschinen, Füller, Druckmaschinen und ähnliches.

Die Behälterbehandlungsmaschine 100 kann zu diesem Zweck beispielsweise ein Karussell 140 mit mehreren Behälterbehandlungsstationen 141 umfassen, in die Behälter aufgenommen und behandelt werden können. Dabei muss die Behandlung der Behälter nicht durch die Behälterbehandlungsstationen selbst erfolgen, sondern kann auch durch an der Peripherie des Karussells angeordnete Behandlungseinheiten, wie beispielsweise Etikettieraggregate oder Druckköpfe, erfolgen. Die Ausführung der Behälterbehandlungsmaschine als Karussell ist nicht zwingend. Alternativ kann die Behälterbehandlungsmaschine auch einen linearen Bereich umfassen, in dem die Behälter entlang einer Transportstrecke transportiert und durch Behandlungsstationen behandelt werden.

In der Figur 1 umfasst die Behälterbehandlungsmaschine weiterhin einen Maschineneinlauf 103, in dem die Behälter transportiert und letztlich dem dargestellten Karussell 140 zugeführt werden. Nach der Behandlung der Behälter in dem Karussell 140 können die Behälter aus den Behälterbehandlungsstationen 141 an eine weitere Transporteinrichtung 180, die hier nur schematisch dargestellt ist, übergeben werden und somit aus der Behälterbehandlungsmaschine abtransportiert werden.

Der Maschineneinlauf 103 kann ein oder mehrere Transportbänder umfassen. In der hier dargestellten Anordnung umfasst der Maschineneinlauf ein erstes Transportband 101, in dem die Behälter 130 mit einer Geschwindigkeit V1 transportiert werden. Dazu wird das Transportband durch einen vorzugsweise regelbaren, insbesondere frequenzgesteuerten Antrieb M1 angetrieben. Die Geschwindigkeit V1 kann dabei so gewählt sein, dass die Behälter nach Verlassen eines vorherigen Prozesses bzw. einer stromauf angeordneten, vorherigen Behälterbehandlungsmaschine im Transportband 101 mit einem geringfügigen Abstand zueinander oder bereits leicht gestaut transportiert werden. Dazu kann die Geschwindigkeit V1 so gewählt werden, dass sie größer ist als die Transportgeschwindigkeit der Behälter in der vorherigen Behälterbehandlungsmaschine oder vorherigen Transportvorrichtungen.

Die Behälter werden vom ersten Transportband 101 auf ein zweites Transportband 102 überführt. Dieses zweite Transportband 102 bewegt sich mit einer Geschwindigkeit bzw. transportiert die Behälter mit einer Geschwindigkeit V2, die größer ist als die Geschwindigkeit V1, sodass sich der Abstand der Behälter im zweiten Transportband 102 verglichen mit dem ersten Transportband 101 weiter vergrößert oder der Staudruck der Behälter nochmals verringert wird. Auch dieses zweite Transportband 102 kann durch einen regelbaren, insbesondere frequenzgesteuerten Antrieb M2 angetrieben werden.

Bevorzugt ist die Geschwindigkeit des zweiten Transportbandes zwischen 5% und 15% größer als die Geschwindigkeit des ersten Transportbandes. Das zweite Transportband 102 kann dabei so angeordnet sein, dass es sich vom Maschineneinlauf 103 durch eine später beschriebene Führung hindurch in die weitere Transporteinrichtung 180 erstreckt, sodass Behälter mit diesem Transportband auch aus der Behälterbehandlungsmaschine nach der Behandlung abtransportiert werden können.

Im Maschineneinlauf 103 werden die Behälter in einem Überführungsbereich 160 von dem ersten Transportband 101 auf das zweite Transportband 102 überführt. Zu diesem Zweck ist im Überführungsbereich 160 eine Führung angeordnet. Diese Führung kann beispielsweise durch zwei bezüglich der Transportrichtung schräg verlaufende, parallele Führungselemente 120 und 121 erfolgen. Die Transportbänder 101 und 102 verlaufen in dem Überführungsbereich 160 vorzugsweise parallel zueinander, sodass durch den Kontakt eines Behälters mit dem Führungselement 120 bei gleichzeitiger Bewegung des ersten Transportbandes 101 eine Überführung dieses Behälters auf das zweite Transportband 102 erfolgt, in dem der Behälter dann weitertransportiert wird. Durch Kontakt des Behälters 130 mit dem Führungselement 120 wirkt ein Drehmoment auf den Behälter, das durch die Transportgeschwindigkeit V1 im ersten Transportband und die damit verbundene Reibungskraft der Oberfläche des Behälters an dem Führungselement 120 sowie dem Anstellwinkel des Führungselements und dem Radius des Behälters bestimmt wird. Um zum einen die Dauer des Kontakts der Oberfläche des Behälters mit dem Führungselement 120 möglichst kurz zu halten und zum anderen Beschädigungen des Behälters zu reduzieren, beträgt der Anstellwinkel des Führungselements 120 mit Bezug auf die durch das erste Transportband 101 definierte Transportrichtung bevorzugt 45°. Aber auch andere Winkel beispielsweise zwischen 30 und 60° sind denkbar. Durch das Drehmoment rollt der Behälter mit seiner Oberfläche an dem Führungselement in Richtung des zweiten Transportbands 102 ab.

Um zu gewährleisten, dass die Überführung der Behälter 130 vom ersten Transportband auf das zweite Transportband zuverlässig erfolgt, kann das erste Transportband 101 in seiner durch den Pfeil dargestellten Transportrichtung unter dem Führungselement 120 hindurch weiterlaufen. Das zweite Transportband 102 kann weiterhin bereits vor dem Führungselement 121 beginnen, sodass Behälter, die vom ersten Transportband 101 auf das zweite Transportband 102 überführt werden, auch in jedem Fall zuverlässig von diesem Transportband weitertransportiert werden.

Stromab des Überführungsbereichs 160 ist ein Sägezahnstern 107 angeordnet. Dieser Sägezahnstern umfasst mehrere Zähne 171 und Taschen 172. Die in dem zweiten Transportband 102 transportierten Behälter werden von dem Sägezahnstern 107 in den Taschen 172 aufgenommen und gemäß der dargestellten Rotationsrichtung des Sägezahnsterns 107 weitertransportiert, um schließlich an das Karussell 140 bzw. eine der Behälterbehandlungsstationen 141 übergeben zu werden. Die Zähne des Sägezahnsterns 107 können dabei vorteilhaft genutzt werden, um ein Abrollen der Behälter in die Taschen 172 zu gewährleisten. So blockieren die Zähne 171 den Einlaufbereich 190 nach der Übernahme eines Behälters für einen nachfolgenden Behälter, bis in Rotationsrichtung die nächste Tasche 172 folgt. Da der Behälter durch das Transportband 102 weiter in Richtung des Sägezahnsterns bewegt wird bzw. ein durch die Geschwindigkeit V2 bedingter Vorschub des Behälters in Richtung des Sägezahnsterns erfolgt, rollt der Behälter an dem sich an ihm vorbeibewegenden Sägezahn ab, bis er in die auf den Sägezahn folgende Tasche 172 gleitet und dann durch den Sägezahnstern 107 weitertransportiert werden kann. Der Sägezahnstern kann mit einer Rotationsgeschwindigkeit betrieben werden, die so gewählt ist, dass die Behälter an die Behandlungsstationen der Behälterbehandlungsmaschine übergeben werden können. Insbesondere kann die Geschwindigkeit, mit der Behälter durch den Sägezahnstern transportiert werden, zwischen 5% und 15% größer sein, als die Transportgeschwindigkeit V2 im zweiten Transportband.

Um zu verhindern, dass Behälter aus den Taschen 172 des Sägezahnsterns 107 herausgleiten, kann ein Führungsbogen 104 vorgesehen sein, der beispielsweise als Kreissegment ausgebildet sein kann und so angeordnet ist, dass sich die Sägezähne entlang des Profils 141 des Führungsbogens bewegen. Die Behälter werden so an einer Bewegung aus dem Sägezahnstern 107 heraus zum einen durch die Taschen 172 und zum anderen durch das Profil des Führungsbogens 104 gehindert.

Die Fig. 1 ist hier nur dazu gedacht, einen grundsätzlichen Überblick über den Aufbau eines Maschineneinlaufs mit einem Sägezahnstern zu gewährleisten und ist nicht beschränkend zu verstehen. So ist es erfindungsgemäß nur erforderlich, dass die Behälter auf einem Transportband in Richtung des Sägezahnsterns transportiert werden, der Transport auf Transportbändern unterschiedlicher Geschwindigkeit ist nicht zwingend.

Figuren 2a und 2b zeigen Ausführungsformen des Maschineneinlaufs gemäß der Erfindung. Hier ist im Wesentlichen der Bereich des Maschineneinlaufs dargestellt, der den Sägezahnstern 107 und zumindest einen Teil des Transportbands 102 umfasst.

In Fig. 2a ist stromauf des Sägezahnsterns in dieser Ausführungsform im Bereich des Transportbands 102 eine bewegliche Sperrvorrichtung 260 angeordnet. Diese Sperrvorrichtung ist als Paar von Sperrklinken 261, 262 derart ausgebildet, dass sie zumindest teilweise in die Transportebene des Transportbands 102 derart hinein bewegt werden können, dass eine weitere Bewegung der darin transportierten Behälter 130 in Richtung des Sägezahnsterns 107 unterbunden wird. Diese Bewegung kann periodisch und insbesondere gekoppelt mit der Bewegung des Sägezahnsterns durch die Antriebe 271 und 272 bewirkt werden, sodass, nachdem ein erster Behälter in eine Tasche des Sägezahnsterns geführt wurde, ein nachfolgender Behälter durch Sperrung des Einlaufbereichs durch die Sperrklinken gemäß Fig. 2a zunächst an einer Bewegung in Richtung des Sägezahnsterns gehindert wird und höchstens eine Drehung relativ zu den Sperrklinken erfährt, die durch die Bewegung des Transportbandes 102 unter dem durch die Sperrklinken in seiner Bewegung gehemmten Behälter hinweg bewirkt wird. Rückt eine Tasche des Sägezahnsterns vor, sodass ein Behälter übergeben werden kann, geben die Sperrklinken den Einlaufbereich frei und der Behälter kann in die Tasche des Sägezahnsterns bewegt und von dieser abtransportiert werden.

Die Sperrklinken können über separate Antriebe oder einen gemeinsamen Antrieb verfügen. In der hier dargestellten Ausführungsform werden die Sperrklinken über separate pneumatische Antriebe 271 und 272 angetrieben. Die Antriebe können beispielsweise über einen Kolben und eine mit der jeweiligen Sperrklinke verbundene Kolbenstange realisiert sein.

Es können jedoch auch elektrische Antriebe, insbesondere Servomotoren verwendet werden. Eine solche Ausführung der Antriebe ist vorteilhaft, da diese eine hohe Schaltfrequenz der Sperrklinken erlauben, was bei einem üblichen Durchsatz von mehreren tausend Behältern pro Stunde dennoch eine zuverlässige Kontrolle des Einlaufs der Behälter in den Sägezahnstern gewährleistet. Außerdem kann, vor allem bei Verwendung eines Servomotors, eine Steuerung des Geschwindigkeitsprofils der Sperrklinken erfolgen.

Bevorzugt ist eine Kontaktfläche 281 bzw. 282 der jeweiligen Sperrklinke so geformt, dass sie mit dem Behälter, der von der Sperrvorrichtung an der weiteren Bewegung gehindert werden soll, formschlüssig, zumindest bereichsweise formschlüssig in Kontakt treten kann. Insbesondere kann die Kontaktfläche eine Kreiszylinderausschnitt-Form aufweisen, die der äußeren Kontur der Behälters hinsichtlich des Durchmessers entspricht.

Hier ist es vorteilhaft, wenn die Sperrklinken oder zumindest die entsprechend geformten Kontaktflächen austauschbar sind, sodass sie bei einem Wechsel von einer Behältersorte mit einer ersten Form auf eine Behältersorte mit einer zweiten Form ausgetauscht werden können. Werden die Kontaktflächen als separate Bauteile für die Sperrklinken bereitgestellt, die mit dem übrigen Sperrklinkenkörper beispielsweise über Klickverbindungen schnellwechselbar verbunden werden können, kann dies vorteilhaft zur Reduzierung etwaiger Umrüstzeiten beitragen.

In Fig. 2b ist eine weitere Ausführungsform der Sperrvorrichtung 260 dargestellt. In dieser Ausführungsform ist die Sperrvorrichtung als Paar von Sperrsternen 291, 292 ausgebildet, die rotieren und den Einlaufbereich abwechselnd freigeben und sperren. Die Rotation des Sägezahnsterns und der Sperrsterne kann miteinander gekoppelt sein, sodass ein geregeltes Freigeben und Sperren des Einlaufbereichs auch bei sich verändernder Rotationsgeschwindigkeit des Sägezahnsterns erfolgen kann.

Die Form der Zähne der Sperrsterne (die die Taschen der Sperrsterne begrenzen) können dabei analog zu den Sperrklinken der Fig. 2a so geformt sein, dass sie formschlüssig mit einem Behälter in Kontakt treten können. Bevorzugt sind die Sperrsterne in einer Halterung derart angeordnet, dass ihre Rotationsachse (in der Halterung) senkrecht zur Transportebene bzw. parallel zur Normale des zweiten Transportbandes verläuft. In dieser Position kann es besonders vorteilhaft sein, wenn die Sperrsterne schnellwechselbar mit der übrigen Behälterbehandlungsmaschine verbunden sind. Beispielsweise können sie auf eine physische Rotationsachse oder Welle aufgesteckt. Sie können dann möglichst schnell gewechselt werden, um beispielsweise in ihrer Form an bestimmte Behältersorten angepasste Sperrsterne beim Umrüsten der Maschine von einer ersten Behältersorte mit einer ersten äußeren Kontur auf eine zweite Behältersorte mit einer zweiten äußeren Kontur zeitlich effizient ausgetauscht werden zu können.

Auch die Sperrsterne können bevorzugt durch einen elektrischen Antrieb angetrieben werden.

Unabhängig davon, ob die Sperrvorrichtung 260 als Paar von Sperrklinken oder als Paar von Sperrsternen ausgebildet ist, kann die Sperrvorrichtung so angeordnet sein, dass, wie in Fig. 2a beschrieben, ein Behälter von den übrigen Behältern durch die Sperrvorrichtung isoliert wird und so separat dem Sägezahnstern zugeführt wird. Dabei kann die Bewegung der Sperrklinken/Sperrsterne so erfolgen, dass ihre Geschwindigkeit von einer Durchlassposition (der Position der Sperrklinken/Sperrsterne, bei der die Sperrvorrichtung für Behälter durchlässig ist) zu einer Sperrposition (der Position der Sperrklinken/Sperrsterne, bei der die Sperrvorrichtung den Einlauf sperrt und nicht für Behälter durchlässig ist) variiert, insbesondere zunächst hoch und bei Erreichen der Sperrposition möglichst gering ist.

Hierzu kann beispielsweise die Spannung, die an den Servomotor angelegt wird, gesteuert werden und so ein Quetschen von Behältern, die an der Weiterbewegung gehindert werden sollen, verhindert werden.

Die Sperrvorrichtung kann zusätzlich zum Sperren und Freigeben des Einlaufs während des Betriebs auch vorteilhaft genutzt werden, um die Behälterbehandlungsmaschine leer zu fahren. Dazu kann die Sperrvorrichtung den Einlauf permanent sperren, sodass keine Behälter mehr in die Behälterbehandlungsmaschine transportiert werden und sämtliche noch in der Behälterbehandlungsmaschine befindlichen Behälter können behandelt und aus dieser abtransportiert werden.

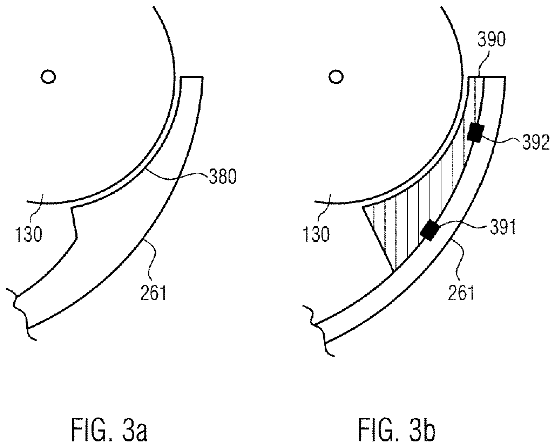

Fig. 3a und 3b zeigen Ausführungsformen der Kontaktfläche einer Sperrklinke, wie sie beispielsweise in Fig. 2a beschrieben wurde.

In Fig. 3a ist eine Sperrklinke 261 in Relation zu einem Behälter 130 mit einer äußeren Kontur (das heißt also eine Form der Oberfläche, wie eine gekrümmte Oberfläche) dargestellt. Der hier dargestellte Behälter besitzt einen im Wesentlichen runden, insbesondere kreisförmigen Querschnitt. Dieser kann beispielsweise durch einen Radius r charakterisiert sein. Der Querschnitt muss nicht über die gesamte Länge des Behälters vom Boden bis zur Öffnung gleich sein, sondern kann auch nur abschnittsweise konstant sein oder beliebig variieren.

Die Form der Kontaktfläche 380 der Sperrklinke ist in der dargestellten Ausführungsform so gewählt, dass sie der Kontur des Behälters 130 entspricht. So kann die Kontaktfläche 380 beispielsweise als Kreissegment (oder, in drei Dimensionen, als Zylindermantelsegment) mit einem entsprechenden Krümmungsradius r vorgesehen sein. Dies erlaubt einen möglichst formschlüssigen Kontakt zwischen Behälter und Sperrklinke, sodass ein Bewegen des Behälters relativ zur Sperrklinke trotz einer fortlaufenden Bewegung des Transportbandes unter dem Behälter hindurch vermieden werden kann.

Da eine Rotation des Behälters relativ zu den Sperrklinken nur schwierig vermieden werden kann, ohne dass die Sperrklinken den Behälter tatsächlich in Form einer Klammer greifen, kann vorgesehen sein, dass die Kontaktfläche 380 ein Material aufweist, das bzgl. des Materials, aus dem der Behälter besteht (beispielsweise PET) einen möglichst geringen Reibungskoeffizienten, insbesondere Gleitreibungskoeffizienten aufweist, sodass der Behälter ohne signifikanten Abrieb an den Sperrklinken abrollen kann.

Fig. 3b zeigt eine weitere Ausführungsform der Kontaktfläche 390 einer Sperrklinke 261. In dieser Ausführungsform ist die Kontaktfläche 390 schnellwechselbar mit dem Grundkörper der Sperrklinke 261 über Verbindungselemente 391 und 392 verbunden. Dabei kann es sich beispielsweise um Klickverbindungen oder starke Magnete handeln. Diese Ausführung gestattet einen Austausch der Kontaktfläche 390, ohne dass hierzu der gesamte Grundkörper bzw. die gesamte Sperrklinke ausgetauscht werden müsste. So kann, beispielsweise bei starker Abnutzung der Kontaktfläche, diese einfach und kostengünstig ersetzt werden. In Kombination mit der Ausführungsform der Fig. 3a können auch vorteilhaft mehrere austauschbare Kontaktflächen 390 vorgesehen sein, deren Form jeweils einer äußeren Form einer bestimmten Sorte von Behälter entspricht, sodass bei einem Formatwechsel auch die Kontaktflächen 390 der Sperrklinken ausgetauscht werden können. Da ein Wechsel der gesamten Sperrklinken so unterbleiben kann, kann der Formatwechsel in kürzerer Zeit erfolgen. Gleichzeitig sinken die Kosten für die Maschine, da die Produktions- und Lagerkosten der Kontaktflächen 390 geringer sind als die ganzer Sperrklinken.

Ferner können die Kontaktfläche 390 und der Grundkörper der Sperrklinke 261 aus unterschiedlichen Materialien bestehen. So kann der Grundkörper aus Edelstahl bestehen oder diesen umfassen und damit sehr langlebig ausgebildet sein. Die Kontaktfläche 390 hingegen kann an bestimmte Anforderungen hinsichtlich des Kontakts mit Behältern angepasst sein (beispielsweise Abrieb).

## Patentansprüche

1. Behälterbehandlungsmaschine (100) zum Behandeln von Behältern (130) wie Flaschen, mit einem Maschineneinlauf (103) umfassend wenigstens ein Transportband (102), wobei ein Sägezahnstern (107) im Maschineneinlauf zur Vergrößerung des Abstands der Behälter angeordnet ist, wobei stromauf des Sägezahnsterns (107) eine Sperrvorrichtung (260) für Behälter (130) zum Sperren und Freigeben des Einlaufbereichs (190) angeordnet ist, **dadurch gekennzeichnet, dass** die Sperrvorrichtung (160) zwei Sperrelemente (261, 262) umfasst, die auf gegenüberliegenden Seiten des Transportbandes angeordnet sind, wobei die Sperrvorrichtung (260) in einem Einlaufbereich (190) unmittelbar vor dem Sägezahnstern (107) angeordnet ist.

2. Behälterbehandlungsmaschine nach Anspruch 1, wobei die Sperrelemente (261, 262) als Sperrklinken mit einer gekrümmten Kontaktfläche für die Behälter (130) ausgebildet sind.

3. Behälterbehandlungsmaschine nach Anspruch 2, wobei jeder Sperrklinke (261, 262) ein pneumatischer oder elektrischer Antrieb (271, 272) zum Bewegen der Sperrklinke zwischen einer Sperrposition und einer Durchlassposition zugeordnet ist.

4. Behälterbehandlungsmaschine nach Anspruch 1, wobei die Sperrelemente (261, 262) als Sperrsterne mit wenigstens drei Sperrzähnen ausgebildet sind und die Rotationsachse der Sperrsterne senkrecht zur durch das Transportband definierten Transportebene der Behälter (130) verläuft.

5. Behälterbehandlungsmaschine nach Anspruch 4, wobei jedem Sperrstern ein Antrieb, insbesondere eine Stellantrieb zugeordnet ist, der eine Bewegung des Sperrsterns derart bewirken kann, dass in einer Sperrposition ein Zahn in das Transportband (102) hineinragt und in einer Durchlassposition eine Tasche des Sperrsterns in Richtung des Transportbandes (102) zeigt.

## Claims

1. Container treatment machine (100) for treating containers (130) such as bottles, with a machine infeed (103) comprising at least one conveyor belt (102), a sawtooth star (107) being arranged in the machine infeed for increasing the distance between the containers, a locking device (260) for containers (130) being arranged upstream of the sawtooth star (107) for locking and releasing the infeed region (190), **characterized in that** the locking device (160) comprises two locking elements (261, 262) which are arranged on opposite sides of the conveyor belt, the locking device (260) being arranged in an infeed region (190) immediately upstream of the sawtooth starwheel (107).

2. Container treatment machine according to claim 1, wherein the locking elements (261, 262) are designed as locking pawls with a curved contact surface for the containers (130).

3. Container treatment machine according to claim 2, wherein a pneumatic or electric drive (271, 272) is assigned to each locking pawl (261, 262) for moving the locking pawl between a locking position and a pass-through position.

4. Container treatment machine according to claim 1, wherein the locking elements (261, 262) are designed as locking stars with at least three locking teeth and the axis of rotation of the locking stars runs perpendicular to the transport plane of the containers (130) defined by the conveyor belt.

5. Container treatment machine according to claim 4, wherein each locking star is assigned a drive, in particular an actuator, which can effect a movement of the locking star in such a way that in a locking position a tooth projects into the conveyor belt (102) and in a pass-through position a pocket of the locking star points in the direction of the conveyor belt (102).

## Revendications

1. Machine de traitement de récipients (100) permettant de traiter des récipients (130) tels que des bouteilles, avec une entrée de machine (103) comprenant au moins une bande transporteuse (102), dans laquelle un arbre à dents de scie (107) est agencé dans l'entrée de machine afin d'augmenter l'espacement entre les récipients, dans laquelle un dispositif de blocage (260) pour des récipients (130) est agencé en amont de l'arbre à dents de scie (107) afin de bloquer et libérer la région d'entrée (190), **caractérisée en ce que** le dispositif de blocage (160) comprend deux éléments de blocage (261, 262) qui sont agencés sur des côtés opposés de la bande transporteuse, dans laquelle le dispositif de blocage (260) est agencé dans une région d'entrée (190) immédiatement avant l'arbre à dents de scie (107).

2. Machine de traitement de récipients selon la revendication 1, dans laquelle les éléments de blocage (261, 262) sont réalisés sous la forme de cliquets de blocage avec une surface de contact incurvée destinée aux récipients (130).

3. Machine de traitement de récipients selon la revendication 2, dans laquelle un entraînement pneumatique ou électrique (271, 272) est associé à chaque cliquet de blocage (261, 262) afin de déplacer le cliquet de blocage entre une position de blocage et une position de traversée.

4. Machine de traitement de récipients selon la revendication 1, dans laquelle les éléments de blocage (261, 262) sont réalisés sous la forme d'étoiles de blocage comprenant au moins trois dents de blocage et l'axe de rotation des étoiles de blocage s'étend perpendiculairement au plan de transport des récipients (130) défini par la bande transporteuse.

5. Machine de traitement de récipients selon la revendication 4, dans laquelle un entraînement, en particulier un actionneur, est associé à chaque étoile de blocage, ledit entraînement pouvant provoquer un mouvement de l'étoile de blocage de telle manière que, dans une position de blocage, une dent pénètre dans la bande transporteuse (102) et, dans une position de traversée, une poche de l'étoile de blocage regarde en direction de la bande transporteuse (102).
